# EUROPÄISCHE PATENTSCHRIFT

(11) **EP 2 061 617 B1**
(45) Veröffentlichungstag und Bekanntmachung des Hinweises auf die Patenterteilung: **15.01.2014**
(21) Anmeldenummer: 07800171.6
(22) Anmeldetag: 07.09.2007
(51) Int. Cl.: B23D 45/04, B23D 45/12, B23D 47/04

(54) **VERFAHREN UND VORRICHTUNG ZUM DURCHTRENNEN EINES INSBESONDERE ROHRFÖRMIGEN WERKSTÜCKS**
METHOD AND DEVICE FOR SEVERING A WORKPIECE, IN PARTICULAR A TUBULAR WORKPIECE
PROCÉDÉ ET DISPOSITIF DE DÉCOUPE D'UNE PIÈCE SENSIBLEMENT TUBULAIRE

(30) Priorität: 08.09.2006 AT 6622006
(43) Veröffentlichungstag der Anmeldung: 27.05.2009
(73) Patentinhaber: Maschinenfabrik Liezen und Gießerei Ges.m.b.H., 8940 Liezen (AT)
(72) Erfinder: THEISCHINGER, Bernhard, Max, A-4623 Gunskirchen (AT); DAUSER, Peter, A-4802 Ebensee (AT)
(74) Vertreter: Hübscher, Helmut
(86) Internationale Anmeldenummer: PCT/AT2007/000426
(87) Internationale Veröffentlichungsnummer: WO 2008/028211

(56) Entgegenhaltungen:
- CH-A5- 685 681
- DE-A1- 3 641 890
- DE-A1- 10 103 856
- DE-C- 7 675
- US-A1- 2004 083 866

## Beschreibung

Die vorliegende Erfindung bezieht sich auf ein Verfahren zum Durchtrennen eines insbesondere rohrförmigen Werkstücks mit einer Trennvorrichtung, insbesondere einem rotierenden, im wesentlichen scheibenförmigen Sägeblatt gemäß dem Oberbegriff des Anspruchs 1, sowie auf eine Vorrichtung zum Durchtrennen eines insbesondere rohrförmigen Werkstücks mit einer Trennvorrichtung, insbesondere einem rotierenden, im wesentlichen scheibenförmigen Sägeblatt gemäß dem Oberbegriff des Anspruchs 8. Ein solches Verfahren und eine solche Vorrichtung sind aus DE 3 641 890 A1 bekannt.

Im Zusammenhang mit einem Durchtrennen eines insbesondere stab- bzw. rohrförmigen Werkstücks mit einer Trennvorrichtung, insbesondere einem rotierenden, im wesentlichen scheibenförmigen Sägeblatt wird üblicherweise das zu durchtrennende Werkstück in einer Halterung bzw. Lagerung im wesentlichen horizontal angeordnet und mit einer beispielsweise von einer Kreissäge gebildeten Trennvorrichtung durchtrennt bzw. durchschnitten. Durch die im wesentlichen horizontale Anordnung des zu durchtrennenden Werkstücks erfolgt eine im wesentlichen vertikale Schnittführung, wobei in diesem Zusammenhang nachteilig ist, dass bei der Durchführung der Durchtrennung bzw. der Herstellung des Schnitts anfallende Späne im Bereich des Schnitts verbleiben und somit den weiteren Schneidbzw. Durchtrennungsvorgang beeinträchtigen bzw. behindern.

Um einen Abtransport von bei Durchführung eines Schnitts bzw. einer Durchtrennung anfallenden Spänen zu unterstützen, wurde beispielsweise gemäß der EP-A 0 070 352 vorgeschlagen, dass bei einer Trennvorrichtung durch eine entsprechende Orientierung der Schnittführung der Abrieb schräg nach unten versprüht wird, wobei jedoch auch bei dieser bekannten Ausführungsform durch die wiederum im wesentlichen horizontale Anordnung des zu durchtrennenden Werkstücks ein zuverlässiges und sicheres Entfernen der beim Schneiden bzw. Durchtrennen anfallenden Späne nicht sichergestellt werden kann.

Im Zusammenhang mit einer Unterstützung eines Abtransports der bei einem Schneiden anfallenden Späne wurde darüber hinaus beispielsweise in der EP-A 0 111 856 vorgeschlagen, dass ein Trennwerkzeug von unten nach oben arbeitet, wobei in diesem Zusammenhang eine äusserst komplizierte Lagerung für das Trennwerkzeug über eine speziell konstruierte Schwenkkonstruktion vorzusehen ist.

Darüber hinaus ist der EP-A 0 023 996 eine Plattensäge mit aufrechtem Gestell zu entnehmen, wobei ein Werkzeugträger zusammen mit einer Kreissäge in eine senkrechte und waagrechte Schnittstellung schwenkbar ist. Eine ähnliche Ausführungsform eines Verfahrens und einer Vorrichtung der eingangs genannten Art ist weiters der US-A 4,185,525 zu entnehmen, wobei eine Kreissäge am Außenumfang eines rohrförmigen Werkstücks für ein Durchtrennen desselben geführt wird.

DE 36 41 890 A1 beschreibt ein Verfahren zum Absenken von runden Schachtabdeckungen in Straßendecken unter Verwendung einer Vorrichtung zum Einfräsen eines Schlitzes in den unterhalb des abzusenkenden Schachtrings befindlichen Distanzring bzw. Kanalschacht. Dabei wird ein Arbeitswerkzeug in Form einer Frässcheibe von oben in den offenen Kanalschacht eingeführt, auf Arbeitsstellung unmittelbar unter dem Schachtring positioniert und im Wesentlichen durch eine kreisförmige Arbeitsbewegung der Frässcheibe unterhalb des Schachtringes ein Schlitz in den darunter befindlichen Distanzring bzw. den Kanalschacht gefräst, wodurch der Schachtring in Folge um die erzeugte Schlitzbreite abgesenkt werden kann. Das Absenken des Schachtringes erfolgt dabei durch Schläge oder eine Absenkvorrichtung, mittels der die entsprechenden Kräfte zum Hinunterdrücken des im umgebenden Straßenbaumaterial festsitzenden Schachtringes erzeugt werden

Weiters offenbart US 2004/0083866 A1 ein Verfahren bzw. eine Vorrichtung zum Durchtrennen der Wand eines Rohres, bei dem in einer Ausführungsform ein Sägeblatt in das Innere eines Rohres eingebracht wird und anschließend durch Verfahren des Sägeblatts in einer Ebene rechtwinkelig zur Rohrachse ein Trennschnitt in der Rohrwand hergestellt wird. Das Sägeblatt ist dabei so positioniert bzw. dimensioniert, dass die im Eingriff befindlichen Zähne etwa in Tangentialrichtung der Rohrwand bewegt werden. Dadurch wird ein zumindest annähernd gratfreier Trennschnitt erreicht. Die Verfahrbewegung des Sägeblattes am Innenumfang des Rohres wird durch zwei rechtwinkelig aufeinander stehende NC-gesteuerte Linearachsen bewirkt.

Die vorliegende Erfindung zielt daher darauf ab, die obengenannten Nachteile zu beseitigen und ein Verfahren sowie eine Vorrichtung der eingangs genannten Art zur Verfügung zu stellen, bei welchen ein einfacher Abtransport der bei einem Durchtrennen bzw. Sägen entstehenden Abfälle bzw. Späne ermöglicht wird oder insbesondere ein Verbleiben derartiger Späne im Bereich der Trennvorrichtung bzw. des hergestellten Schnitts verhindert wird.

Diese Aufgabe wird erfindungsgemäß durch die Merkmale der Hauptanspruche 1 und 8 gelöst.

Weitere vorteilhafte Ausführungsformen sind den abhängigen Ansprüchen 2 bis 7 und 9 bis 18 zu entnehmen.

Durch die Bewegung der Trennvorrichtung in einer horizontalen Richtung zur Durchtrennung des Werkstücks in einer im wesentlichen horizontalen Ebene, wobei das Werkstück in einer im wesentlichen vertikalen Ausrichtung bzw. Orientierung angeordnet und festgelegt ist, wird sichergestellt, dass die bei dem Trennbzw. Schneidvorgang entstehenden Abfälle bzw. Späne sicher aus dem Bereich des herzustellenden Schnitts entfernt werden und insbesondere aufgrund der Schwerkraft zu Boden fallen, wodurch sichergestellt wird, dass beim Schneiden entstehende Späne bzw. Abfälle den weiteren Schneidvorgang nicht behindern bzw. beeinträchtigen. Durch das erfindungsgemäß vorgeschlagene Einführen der Trennvorrichtung in das Innere des rohrförmigen Werkstücks wird darüber hinaus ermöglicht, dass beispielsweise eine Festlegung des zu durchtrennenden, rohrförmigen Werkstücks am Außenumfang desselben vorgenommen werden kann, ohne die für den Trennvorgang erforderliche Bewegung der Trennvorrichtung relativ zu dem zu durchtrennenden Werkstück im wesentlichen über dessen gesamten Umfang zu beeinträchtigen bzw. zu beeinflussen. Durch die im wesentlichen vertikale Orientierung bzw. Ausrichtung des Werkstücks zur Durchführung einer Durchtrennung in einer im wesentlichen horizontalen Ebene muss für eine ausreichende Befestigung bzw. Einspannung des zu durchtrennenden Werkstücks Sorge getragen werden. Darüber hinaus muss darauf geachtet werden, dass der Bereich der Durchtrennung bzw. des herzustellenden Schnitts von über dem Gewicht des über dem herzustellenden Schnitt verbleibenden Bereichs des zu durchtrennenden Werkstücks für eine glatte Schnittführung entlastet wird. In diesem Zusammenhang wird gemäß einer bevorzugten Ausführungsform vorgeschlagen, dass das Werkstück zumindest oberhalb der Position der durchzuführenden Durchtrennung eingespannt bzw. ortsfest gehalten wird. Eine derartige Einspannung bzw. Ortsfestlegung bzw. Halterung des Werkstücks zumindest oberhalb der Position der durchzuführenden Durchtrennung wird sichergestellt, dass das Gewicht des oberhalb der Durchtrennung befindlichen Teilbereichs des zu bearbeitenden Werkstücks nicht auf die Trennvorrichtung wirkt und insbesondere unmittelbar vor einer Fertigstellung der Durchtrennung bzw. des Schnitts nicht zu einem Verkanten bzw. Verkeilen im Bereich des herzustellenden Schnitts führt.

Für den Fall von kleine Abmessungen aufweisenden, zu durchtrennenden Werkstücken kann eine Relativbewegung zwischen dem zu durchtrennenden Werkstück und der Trennvorrichtung ausreichend sein. Insbesondere bei größeren Abmessungen aufweisenden Werkstücken ist es oftmals nicht möglich, eine Trennvorrichtung, insbesondere ein rotierendes, im wesentlichen scheibenförmiges Sägeblatt nach Art einer Kreissäge ausreichender Größe zur Verfügung zu stellen, so dass das Werkstück unmittelbar durch eine einzige, beispielsweise lineare Bewegung zwischen dem Werkstück und der Trennvorrichtung durchtrennbar ist. In diesem Fall wird gemäß einer bevorzugten Ausführungsform vorgeschlagen, dass die Trennvorrichtung und/oder das rohrförmige, zu durchtrennende Werkstück entsprechend dem Innenumfang bzw. der Innenkontur des zu durchtrennenden Werkstücks relativ zueinander bewegt wird bzw. werden, so dass auch gegebenenfalls große Abmessungen aufweisende Werkstücke durch vergleichsweise kleine Abmessungen aufweisende Trennvorrichtungen durchtrennt bzw. geschnitten werden können. Erfindungsgemäß kann insbesondere entsprechend den vorzunehmenden Bewegungen der Trennvorrichtung zur Durchführung bzw. Fertigstellung des Trennvorgangs entweder mit einer Bewegung lediglich der Trennvorrichtung oder des zu durchtrennenden, rohrförmigen Werkstücks das Auslangen gefunden werden oder es kann eine Kombination bzw. Kopplung einer Bewegung des rohrförmigen Werkstücks sowie einer Bewegung der Trennvorrichtung relativ zueinander herangezogen werden, um den Trennvorgang beispielsweise unter Beanspruchung eines vergleichsweise geringen Platzbedarfs insbesondere bei Durchtrennung große Abmessungen aufweisender, rohrförmiger Werkstücke sicherzustellen. Für eine Höheneinstellung der am Werkstück vorzunehmenden Durchtrennung ist gemäß einer weiters bevorzugten Ausführungsform vorgesehen, dass die Trennvorrichtung in einer im wesentlichen vertikalen Richtung relativ zum Werkstück bewegbar ist.

Insbesondere bei Einsatz von relativ kleine Abmessungen aufweisenden Trennvorrichtungen zum Trennen bzw. Schneiden von rohrförmigen Werkstücken wird gemäß einer weiters bevorzugten Ausführungsform vorgeschlagen, dass für das Durchtrennen des rohrförmigen Werkstücks die Trennvorrichtung entlang des Innenumfangs des zu durchtrennenden Werkstücks bewegt wird. Es lässt sich somit die scheibenartige Trennvorrichtung, beispielsweise nach Art einer Kreissäge in das Innere des zu durchtrennenden Werkstücks einbringen, so dass das Werkstück von innen nach außen durchtrennt wird.

Insbesondere für den Fall von große Wandstärken bzw. -dicken aufweisenden rohrförmigen, zu durchtrennenden Werkstücken wird darüber hinaus vorgeschlagen, dass für ein Durchtrennen eines rohrförmigen Werkstücks großer Dicke die Trennvorrichtung mehrfach entlang des Innenumfangs des zu durchtrennenden Werkstücks bewegt wird und zur Durchführung der Durchtrennung zunehmend und insbesondere spiralförmig in die zu durchtrennende Wandstärke des Werkstücks eindringt, wie dies einer weiters bevorzugten Ausführungsform des erfindungsgemäßen Verfahrens entspricht.

Wie bereits mehrfach erwähnt, gelingt es durch Einsatz des erfindungsgemäßen Verfahrens während des Trennvorgangs bzw. Schneidvorgangs entstehende Abfälle bzw. Späne unmittelbar aus dem Bereich der herzustellenden Durchtrennung zu entfernen, wobei derartige Abfälle bzw. Späne durch die im wesentlichen vertikale Ausrichtung bzw. Orientierung des zu durchtrennenden Werkstücks unter Einfluss der Schwerkraft zu Boden fallen. Für eine ordnungsgemäße Sammlung und/oder Entfernung der anfallenden Späne wird gemäß einer weiters bevorzugten Ausführungsform vorgeschlagen, dass im Bereich der Auflage des Werkstücks auf einer Halterung beim Durchtrennen des Werkstücks entstehende Späne gesammelt und/oder abgefördert werden.

Wie oben bereits angedeutet, kann für eine Durchführung des Trennvorgangs eine Kopplung bzw. Kombination einer Bewegung sowohl der Trennvorrichtung als auch des rohrförmigen Werkstücks vorgesehen sein, wobei in diesem Zusammenhang gemäß einer weiters bevorzugten Ausführungsform vorgeschlagen wird, dass die Trennvorrichtung und das röhrförmige Werkstück in einander kreuzenden bzw. schneidenden, insbesondere im wesentlichen orthogonal aufeinander stehenden Richtungen relativ zueinander bewegt werden. Durch entsprechende Wahl der Bewegungsrichtungen sowohl der Trennvorrichtung als auch des rohrförmigen Werkstücks kann den örtlichen Gegebenheiten bzw. dem Platzbedarf Rechnung getragen werden, wobei insbesondere bei Vorsehen von im wesentlichen orthogonal aufeinander stehenden Bewegungsrichtungen mit einer entsprechend einfachen Steuerung zur Bewegung sowohl der Trennvorrichtung als auch des zu durchtrennenden, rohrförmigen Werkstücks für die hiefür erforderlichen Antriebe das Auslangen gefunden werden kann.

Zur Lösung der eingangs genannten Aufgaben ist darüber hinaus eine Vorrichtung der eingangs genannten Art im wesentlichen gekennzeichnet durch eine Halterung zur Anordnung und Festlegung des Werkstücks in einer im wesentlichen vertikalen Ausrichtung und eine Abstützeinrichtung für die Trennvorrichtung für ein Einführen der Trennvorrichtung in das Innere des rohrförmigen Werkstücks und ein Bewegen der Trennvorrichtung in einer im wesentlichen horizontalen Richtung zur Durchtrennung des Werkstücks in einer im wesentlichen horizontalen Ebene. Durch die im wesentlichen vertikale Ausrichtung bzw. Orientierung des zu durchtrennenden Werkstücks sowie die Bewegung der Trennvorrichtung in einer im wesentlichen horizontalen Ebene wird sichergestellt, dass während des Schneidvorgangs anfallende Abfälle bzw. Späne sicher aus dem Bereich des herzustellenden Schnitts entfernt werden und somit den weiteren Schneidvorgang beeinträchtigen bzw. beeinflussen.
Wie oben bereits angedeutet, muss für die im wesentlichen vertikale Ausrichtung bzw. Orientierung des zu durchtrennenden Werkstücks für eine ge-sicherte Festlegung gesorgt werden. In diesem Zusammenhang wird gemäß einer bevorzugten Ausführungsform der erfindungsgemäßen Vorrichtung vorgesehen, dass zur Festlegung des Werkstücks wenigstens eine das zu durchtrennende Werkstück wenigstens teilweise umgebende Spann- bzw. Festlegungseinrichtung vorgesehen ist.
Zur Entlastung des Trennvorgangs und auch zur Aufnahme des Gewichts des oberhalb der durchzuführenden Durchtrennung liegenden Teilbereichs des gegebenenfalls große Abmessungen und ein großes Gewicht aufweisenden Werkstücks ist darüber hinaus vorgesehen, dass wenigstens eine Spann- bzw. Festlegungseinrichtung oberhalb der Position einer Durchtrennung des Werkstücks vorgesehen ist.

Um eine Bewegung der Trennvorrichtung relativ zu dem Werkstück und insbesondere beispielsweise entlang des zu durchtrennenden Umfangs bzw. der Kontur zu ermöglichen, ist gemäß einer bevorzugten Ausführungsform vorgesehen, dass die Abstützeinrichtung für die Trennvorrichtung in einer horizontalen Ebene insbesondere in zwei einander kreuzenden bzw. schneidenden Richtungen bewegbar ist. Durch eine derartige Bewegung der Abstützeinrichtung und somit der gesamten Trennvorrichtung in zwei einander kreuzenden bzw. schneidenden Richtungen kann im wesentlichen unabhängig von dem Umfang bzw. der Kontur des zu durchtrennenden Werkstücks sicher das Werkstück durchtrennt werden.

Für eine besonders einfache und zuverlässige Bewegung der Abstützeinrichtung und somit der Trennvorrichtung in einer im wesentlichen horizontalen Ebene wird darüber hinaus vorgeschlagen, dass die Abstützeinrichtung auf einem Kreuzschütten montiert ist, welcher in einander kreuzenden Richtungen in an sich bekannter Weise über Kugelumlaufspindeln und Servobzw. Schrittmotoren verschiebbar ist, wie dies einer weiters bevorzugten Ausführungsform der erfindungsgemäßen Vorrichtung entspricht.

Zur Aufnahme großer Kräfte und einer gegebenenfalls größere Abmessungen aufweisenden Trennvorrichtung sowie insbesondere eines entsprechend leistungsstarken Antriebs ist eine stabile Lagerung der Trennvorrichtung vorzusehen. In diesem Zusammenhang wird gemäß einer bevorzugten Ausführungsform der Erfindung vorgeschlagen, dass die Abstützeinrichtung von einer im wesentlichen vertikalen Säule gebildet ist, an welcher ein eine Antriebseinrichtung für die Trennvorrichtung sowie die Trennvorrichtung tragender Arm festlegbar ist. Eine derartige, im wesentlichen vertikale Säule kann entsprechend massiv ausgebildet sein, wobei durch den oben angeführten, besonders bevorzugten Kreuzschlitten auch eine zuverlässige Bewegung der Abstützeinrichtung und somit der Trennvorrichtung erzielbar ist. Der darüber hinaus vorgesehene Arm kann ebenfalls entsprechend massiv zur Aufnahme großer Kräfte während des Trennvorgangs als auch zur Lagerung beispielsweise eines ein entsprechend großes Gewicht aufweisenden Antriebs ausgebildet sein.

Für eine exakte Positionierung der Trennvorrichtung relativ zum zu durchtrennenden Werkstück ist gemäß einer weiters bevorzugten Ausführungsform vorgesehen, dass der Arm entlang der Säule höhenverstellbar angeordnet ist.

Neben der Möglichkeit einer Verstellung der Trennvorrichtung über die Höhenverstellbarkeit des Arms entlang der von einer Säule gebildeten Abstützeinrichtung kann insbesondere für eine Feinjustierung zusätzlich die Trennvorrichtung relativ zur Abstützeinrichtung und insbesondere relativ zum die Trennvorrichtung tragenden Arm oder einem damit verbundenen Antrieb verstellbar sein. In diesem Zusammenhang wird vorgeschlagen, dass die Trennvorrichtung relativ zur Abstützeinrichtung in unterschiedlichen Höhenpositionen festlegbar ist, wie dies einer weiters bevorzugten Ausführungsform der erfindungsgemäßen Vorrichtung entspricht.

Zur Anpassung an unterschiedliche Abmessungen aufweisende Werkstücke wird darüber hinaus gemäß einer weiters bevorzugten Ausführungsform vorgeschlagen, dass die wenigstens eine Spannbzw. Festlegungseinrichtung höhenverstellbar an einem zusätzlichen, im wesentlichen vertikalen Support vorgesehen ist.

Für eine zuverlässige Sammlung und einen ordnungsgemäßen Abtransport der während des Trennvorgangs entstehenden Abfälle bzw. Späne wird darüber hinaus bevorzugt vorgeschlagen, dass in der Halterung bzw. Aufnahme für das zu durchtrennende Werkstück eine Einrichtung zum Sammeln und/oder Abfördern von beim Durchtrennen entstehenden Spänen vorgesehen ist. Zur Erleichterung der relativen Positionierung insbesondere während des Trennvorgangs zwischen dem zu durchtrennenden Werkstücks als auch der Trennvorrichtung sowie zur Bereitstellung einer stabilen Konstruktion wird darüber hinaus vorgeschlagen, dass sowohl die Abstützeinrichtung der Trennvorrichtung als auch die Halterung für das zu durchtrennende Werkstück auf, wie dies einer weiters bevorzugten Ausführungsform der erfindungsgemäßen Vorrichtung entspricht.

Wie oben bereits angedeutet, kann zur Erzielung der für den Trennvorgang erforderlichen Relativbewegungen zwischen der Trennvorrichtung sowie dem rohrförmigen Werkstück einerseits eine Bewegung lediglich der Trennvorrichtung vorgesehen sein. Zusätzlich oder alternativ hiezu kann jedoch auch vorgesehen sein, dass die Halterung für das rohrförmige Werkstück relativ zu der Abstützeinrichtung der Trennvorrichtung bewegbar ist, so dass die für den Trennvorgang erforderliche Relativbewegung beispielsweise durch eine entsprechende Bewegung des rohrförmigen Werkstücks über eine entsprechende Bewegung der Halterung hiefür erzielbar ist. Hiebei könnte beispielsweise die Trennvorrichtung im wesentlichen ortsfest angeordnet sein, so dass durch eine Bewegung des zu durchtrennenden, rohrförmigen Werkstücks relativ hiezu ebenfalls der gewünschte Trennvorgang durchgeführt wird.

Im Zusammenhang mit einer Bewegbarkeit des rohrförmigen Werkstücks über einen entsprechenden Antrieb für die Halterung hiefür wird darüber hinaus gemäß einer weiters bevorzugten Ausführungsform vorgeschlagen, dass die Halterung zur Anordnung und Festlegung des rohrförmigen Werkstücks und die Abstützeinrichtung für die Trennvorrichtung in einander kreuzenden bzw. schneidenden, insbesondere im wesentlichen orthogonal aufeinander stehenden Richtungen bewegbar sind. Durch Vorsehen sowohl einer Bewegung der Trennvorrichtung bzw. der Abstützeinrichtung hiefür als auch des zu durchtrennenden, röhrförmigen Werkstücks bzw. der Halterung hiefür kann gegebenenfalls beengten Platzverhältnissen Rechnung getragen werden. Darüber hinaus kann durch eine derartige Trennung der Bewegungen sowohl der Trennvorrichtung als auch des Werkstücks beispielsweise mit einfachen VerSchiebebewegungen in einer linearen Richtung das Auslangen gefunden werden, so dass einfach zu konstruierende und einfach zu steuernde Antriebe, wie beispielsweise Schlitten, sowohl für die Abstützeinrichtung der Trennvorrichtung als auch der Halterung für das zu durchtrennende, rohrförmige Werkstück ausreichend sind, wobei bei Vorsehen von einfachen, linearen Relativbewegungen zueinander, insbesondere gemäß im wesentlichen orthogonal aufeinander stehenden Richtungen auch eine einfache Steuerung der einzelnen Antriebe zur Erzielung der gewünschten Relativbewegung zur Durchführung des Trennvorgangs einfach realisierbar ist. Durch eine derartige Trennung der Bewegung sowohl der Trennvorrichtung als auch des zu durchtrennenden Werkstücks insbesondere in im wesentlichen orthogonal aufeinander stehenden Richtungen können darüber hinaus die während des Schneidvorgangs auftretenden Kräfte entsprechend auf die

Trennvorrichtung als auch das zu durchtrennende Werkstück aufgeteilt werden, so dass unter Berücksichtigung der durch die Rotation der Trennvorrichtung in Form einer Kreissäge zusätzlich auftretende Kräfte entsprechend sicher und einfach in entsprechende Halterungen und Abstützvorrichtungen aufgenommen werden können bzw. mit kleinere Abmessungen aufweisenden, derartigen Halterungen bzw. Abstützeinrichtungen das Auslangen gefunden werden kann.

Die Erfindung wird nachfolgend anhand von in den beiliegenden Zeichnungen schematisch dargestellten Ausführungsbeispielen näher erläutert. In dieser zeigen:
Fig. 1 eine perspektivische Ansicht einer erfindungsgemäßen Vorrichtung zur Durchführung des erfindungsgemäßen Verfahrens zum Durchtrennen eines Werkstücks, wobei kein Werkstück dargestellt ist;
Fig. 2 in einer zu Fig. 1 ähnlichen Darstellung die erfindungsgemäße Vorrichtung zur Durchführung des erfindungsgemäßen Verfahrens, wobei ein Werkstück durchtrennt wird;
Fig. 3 eine Draufsicht auf die erfindungsgemäße Vorrichtung mit dem zu durchtrennenden Werkstück ähnlich zu Fig. 2;
Fig. 4 eine Seitenansicht auf die erfindungsgemäße Vorrichtung; und
Fig. 5 eine schematische Teildraufsicht auf eine abgewandelte Ausführungsform einer erfindungsgemäßen Vorrichtung zur Durchführung des erfindungsgemäßen Verfahrens, wobei sowohl das zu durchtrennende, rohrförmige Werkstück als auch die Trennvorrichtung relativ zueinander bewegbar sind.

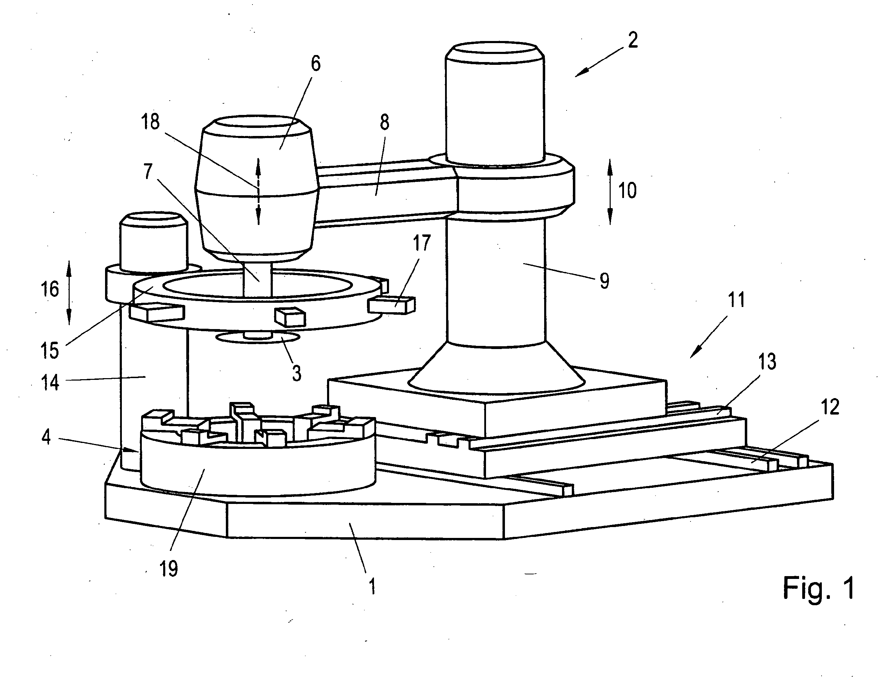

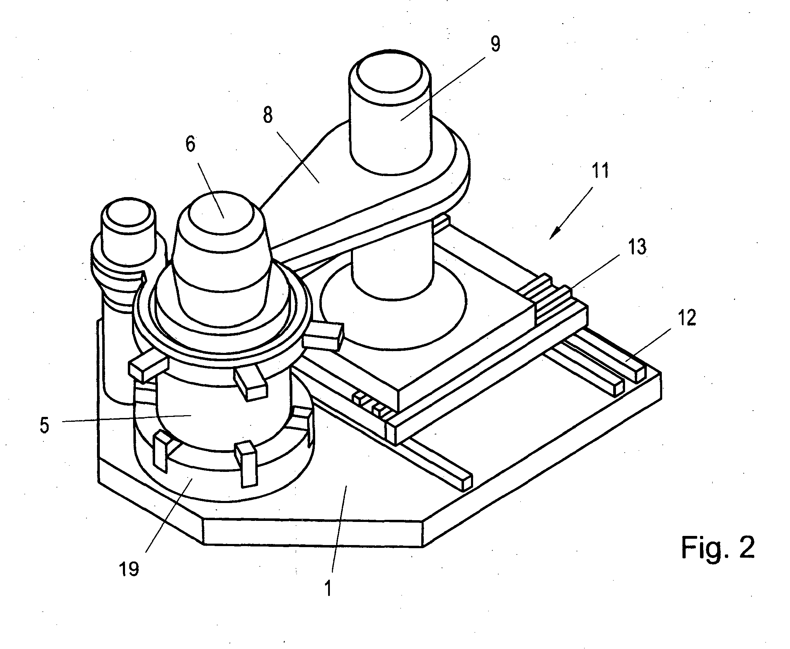

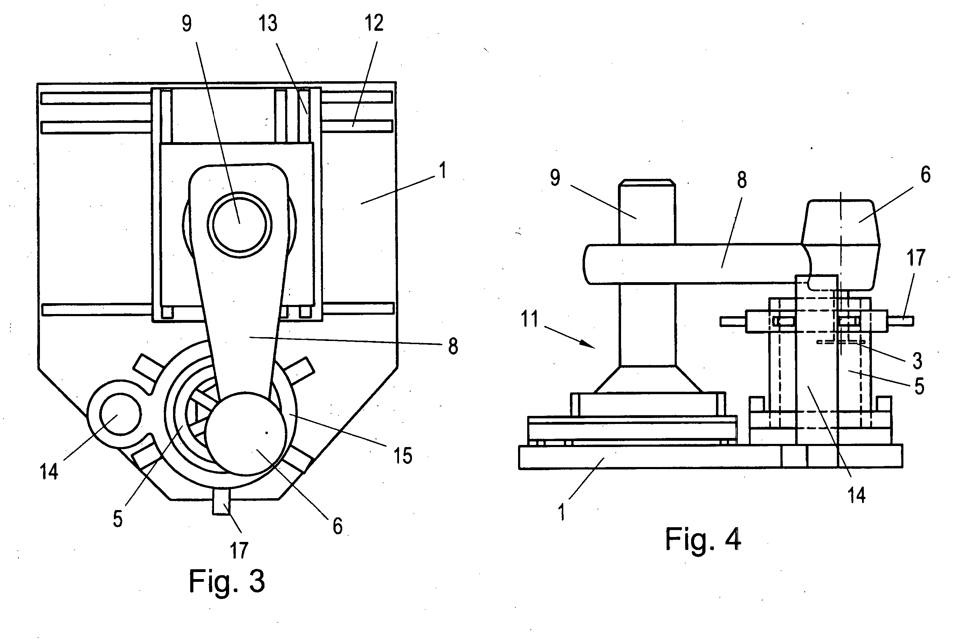

In Fig. 1 bis 4 ist mit 1 eine Basis bzw. Basisplatte bezeichnet, an welcher eine allgemein mit 2 bezeichnete Abstützeinrichtung für eine beispielsweise von einem rotierenden, im wesentlichen scheibenförmigen Sägeblatt 3 gebildete Trennvorrichtung als auch eine allgemein mit 4 bezeichnete Halterung für ein in Fig. 2 bis 4 dargestelltes und mit 5 bezeichnetes, rohrförmiges Werkstück vorgesehen bzw. angeordnet ist.

Die von einem Sägeblatt gebildete Trennvorrichtung 3 wird über einen schematisch mit 6 angedeuteten Antrieb über eine Antriebswelle 7 zu einer Rotation für eine Durchtrennung des Werkstücks 5 angetrieben, wobei die Antriebsvorrichtung 6 über einen Arm 8 an einer im wesentlichen vertikalen Säule 9 entsprechend dem Doppelpfeil 10 höhenverstellbar gelagert ist. Die Säule 9 der Abstützeinrichtung 2 ist relativ zur Basisplatte 1 über einen allgemein mit 11 bezeichneten Kreuzschlitten verlagerbar, wobei Führungsschienen für eine Verlagerung des Schlittens 11 in aufeinander normal stehenden Richtungen mit 12 und 13 bezeichnet sind. Ein derartiger Kreuzschlitten 11 wird in an sich bekannter Weise beispielsweise über Kugelumlaufspindein und Servobzw. Schnittmotoren angetrieben, wobei dies aufgrund der Bekanntheit derartiger Ausführungen nicht näher erläutert wird.

Neben der an der Basis bzw. Basisplatte 1 vorgesehenen bzw. angeordneten Halterung 19 für das in Fig. 2 bis 4 dargestellte, im wesentlichen rohrförmige Werkstück 5 wird zur Festlegung des Werkstücks 5 darüber hinaus an einem im wesentlichen vertikalen Support 14 wenigstens eine Spannvorrichtung 15 entsprechend dem Doppelpfeil 16 höhenverstellbar gelagert, wobei Spannelemente für das zu sichernde bzw. aufzunehmende Werkstück 5 darüber hinaus mit 17 angedeutet sind. Neben der Aufnahme des Werkstücks 5 in der Halterung 19 erfolgt somit eine Festlegung über die Festlegungbzw. Spannvorrichtung 15. Die Spannvorrichtung 15 greift, wie dies beispielsweise aus Fig. 1 ersichtlich ist, in einem Bereich oberhalb der Trennvorrichtung 3 am Werkstück 5 an, um bei einer Durchtrennung des Werkstücks 5 entlang einer im wesentlichen horizontalen Ebene den vom in der Halterung 19 verbleibenden Bereich des Werkstücks 5 zu trennenden Bereich sicher zu halten und insbesondere ein Klemmen der Trennvorrichtung 3 aufgrund des in vertikaler Richtung wir-kenden Gewichts des zu durchtrennenden Werkstücks 5 auf die Schnittfläche zu verhindern.

Durch die Bewegung und Anordnung der Trennvorrichtung 3 in einer im wesentlichen horizontalen Richtung zur Durchtrennung des im wesentlichen vertikal angeordneten und festgelegten Werkstücks 5 ergibt sich, dass während des Trennens anfallender Abfall bzw. anfallende Späne unmittelbar aus dem Sägeschnitt bzw. dem Trennungsbereich austreten und beispielsweise bei der in Fig. 1 bis 4 dargestellten Durchtrennung eines rohrförmigen Werkstücks, wobei die Trennvorrichtung 3 im Inneren des Rohrs 5 geführt wird, derartige Abfälle bzw. Späne im Inneren des Werkstücks 5 in den Bereich der Halterung 19 zu Boden fallen, wo sie gesammelt werden und über eine beispielsweise unterhalb der Basisplatte 1 angeordnete Abfördereinrichtung entfernt werden.

Für ein Durchtrennen eines rohrförmigen Werkstücks 5, wie dies in Fig. 1 bis 4 dargestellt ist, wird die Trennvorrichtung 3 durch eine entsprechende Bewegung entsprechend dem Doppelpfeil 10 in das Innere des Werkstücks 5 auf die gewünschte Position des durchzuführenden Schnitts abgesenkt, worauf durch eine Bewegung des Kreuzschlittens 11 entlang der orthogonal aufeinanderstehenden Führungen 12 und 13 eine Bewegung der Trennvorrichtung bzw. des Sägeblatts 3 entlang des Innenumfangs des zu durchtrennenden Werkstücks 5 vorgenommen wird. Bei geringer Wandstärke des Werkstücks 5 kann bei entsprechender Ausbildung bzw. Größe des Sägeblatts 3 mit einer einmaligen Bewegung entlang des Innenumfangs für ein vollständiges Durchtrennen das Auslangen gefunden werden. Bei einem Durchtrennen eines eine größere Wandstärke aufweisenden Werkstücks 5 erfolgt eine Durchtrennung des Werkstücks 5 durch eine mehrfache Bewegung der Trennvorrichtung 3 entlang des Innenumfangs des zu durchtrennenden Werkstücks 5, wobei die Trennvorrichtung bzw. das Sägeblatt 3 spiralartig in die Materialstärke des zu durchtrennenden Werkstücks 5 eindringt und durch die fortgesetzte erhöhte Eindringtiefe nach mehrmaligen Umlauf entlang des Innenumfangs des Werkstücks 5 dieses durchtrennt.

Für eine Feinpositionierung kann neben der durch den Doppelpfeil 10 angedeuteten Höhenverstellbarkeit des Arms 8 und somit der Trennvorrichtung 3 relativ zum zu durchtrennenden Werkstück 5 zusätzlich auch eine Höhenversteilbarkeit der Antriebswelle 7 relativ zur Antriebsvorrichtung 6 entsprechend den strichliert angedeuteten Doppelpfeil 18 vorgesehen sein.

Für eine größere Länge aufweisende Werkstücke kann eine entsprechende Mehrzahl von Festlegungsbzw. Spanneinrichtungen 15 entlang des vertikalen Supports 14 insbesondere höhenverstellbar vorgesehen sein.

Anstelle der Bewegung der Antriebsvorrichtung 6 und somit der Trennvorrichtung 3 über die auf dem Kreuzschlitten 11 gelagerte vertikale Abstützeinrichtung 9 kann eine Bewegung der Trennvorrichtung 3 zum Durchtrennen eines vertikal angeordneten Werkstücks 5 auch beispielsweise durch eine entsprechende gelenkige und antreibbare Ausbildung des Arms 8 zur Verfügung gestellt werden.

Durch die im wesentlichen vertikale Anordnung des Werkstücks 5 sowie die im wesentlichen horizontale Anordnung der Schnittbzw. Durchtrennungsebene der Trennvorrichtung 3 ergibt sich, dass im Bereich der Schnittfläche auftretende Späne unmittelbar aus dieser entfernt werden und somit den weiteren Schnittbzw. Durchtrennungsvorgang nicht beeinträchtigen bzw. behindern.

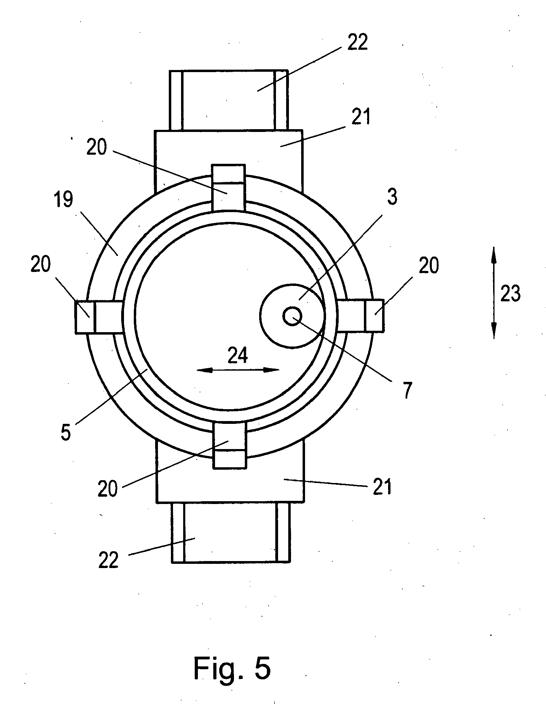

Bei der in Fig. 5 schematisch dargestellten, abgewandelten Ausführungsform ist ein wiederum mit 5 bezeichnetes, rohrförmiges Werkstück an der Halterung 19 über mit 20 angedeutete Klemmbacken festgelegt, wobei die Halterung 19 auf einem schematisch mit 21 angedeuteten Schlitten, welcher in schematisch angedeuteten Führungen 22 bewegbar ist, in Richtung des Doppelpfeils 23 bewegbar ist.

Darüber hinaus ist in der in Fig. 5 dargestellten, schematischen Draufsicht ersichtlich, dass die wiederum mit 3 bezeichnete Trennvorrichtung in Form eines Sägeblatts in das Innere des rohrförmigen Werkstücks 5 eingeführt ist, wobei die Antriebswelle wiederum mit 7 angedeutet ist. Unter Berücksichtigung der Bewegung der Haltevorrichtung 19 und somit des Werkstücks 5 im Sinn des Doppelpfeils 23 ist für die Durchführung eines Trennvorgangs vorgesehen, dass die Trennvorrichtung 3 bzw. das Sägeblatt gemäß dem Doppelpfeil 24 in einer Richtung im wesentlichen orthogonal auf die Bewegungsrichtung 23 der Halterung 19 und somit des rohrförmigen Werkstücks 5 bewegbar ist, wobei die Bewegung der Trennvorrichtung 3 wie in der vorangehenden Ausführungsform über eine entsprechende lineare Bewegung beispielsweise im Bereich des Schlittens 11 für die Abstützeinrichtung bzw. Säule 9 sowie des Arm 8 erzielbar ist.

Es lässt sich somit bei der in Fig. 5 dargestellten Ausführungsform die Bewegung der Trennvorrichtung 3 auf eine ein-fache Linearbewegung entsprechend dem Doppelpfeil 24 reduzieren, wobei diese Linearbewegung der Trennvorrichtung 3 mit der Linearbewegung der Halterung 19 und somit des rohrförmigen Werkstücks 5 entsprechend dem Doppelpfeil 23 durch eine einfache Steuerung kombiniert wird, um insgesamt den Trennvorgang des rohrförmigen Werkstücks 5 zuverlässig und einfach durchzuführen. Hiebei kann bei entsprechend geringer Wandstärke mit einem einmaligen Trennvorgang 3 das Auslangen gefunden werden, während, wie auch bei der vorangehenden Ausführungsform, bei größeren Wandstärken gegebenenfalls eine mehrfache Bewegung der Trennvorrichtung entsprechend bzw. entlang der Innenkontur bzw. des Innenumfangs des rohrförmigen Werkstücks 5 erfolgt, um durch ein im wesentlichen spiralförmiges Eindringen der Trennvorrichtung 3 in das Innere der Wandstärke des zu durchtrennenden, rohrförmigen Werkstücks 5 den gewünschten Trennbzw. Schnittvorgang fertigzustellen.

Anstelle der in Fig. 5 angedeuteten, im wesentlichen orthogonalen Anordnung der Bewegungsrichtungen 23 und 24 der

Halterung 19 und somit des rohrförmigen Werkstücks 5 als auch der Trennvorrichtung 3 gemeinsam mit der in Fig. 5 nicht näher dargestellten Abstützeinrichtung 8, 9 können beispielsweise in Anpassung an zur Verfügung stehende Platzverhältnisse auch unter einem von 90[deg.] abweichenden Winkel schneidende bzw. kreuzende Bewegungsrichtungen 23 bzw. 24 vorgesehen sein.

Alternativ zu der in Fig. 1 bis 4 dargestellten Ausführungsform, wobei das zu durchtrennende, röhrförmige Werkstück 5 in der Halterung 19 im wesentlichen ortsfest positioniert ist, und die für Durchführung des Trennvorgangs erforderliche Relativbewegung ausschliesslich durch die Trennvorrichtung 3 durchgeführt wird, sowie der in Fig. 5 dargestellten Ausführungsform einer Kopplung bzw. Kombination von jeweils insbesondere Linearbewegungen des Werkstücks 5 als auch der Trennvorrichtung 3 entsprechend den Pfeilen 23 und 24 relativ zueinander kann gemäß einer weiters abgewandelten Ausführungsform vorgesehen sein, dass die Trennvorrichtung 3 im wesentlichen ortsfest angeordnet ist, während die zur Durchführung des Trennvorgangs erforderliche Relativbewegung lediglich durch eine entsprechende Bewegung des rohrförmigen Werkstücks 5 erzielt wird, wofür beispielsweise ähnlich wie bei der Ausführungsform gemäß Fig. 1 bis 4 beispielsweise die Halterung 19 und somit das rohrförmige Werkstück 5 auf einer eine Bewegung in einer im wesentlichen horizontalen Ebene ermöglichenden Vorrichtung, beispielsweise einem Kreuzschlitten, gelagert werden könnte.

Mit den in den Figuren dargestellten Vorrichtungen können beispielsweise ein üblicherweise hohes Gewicht und eine große Wandstärke aufweisende Schmiederinge als röhrförmiges Werkstück 5 zuverlässig und mit der erforderlichen Genauigkeit geschnitten bzw. durchtrennt werden.

## Patentansprüche

1. Verfahren zum Durchtrennen eines insbesondere rohrförmigen Werkstücks (5) mit einer Trennvorrichtung (3), insbesondere einem rotierenden, im wesentlichen scheibenförmigen Sägeblatt, umfassend die folgenden Schritte:
- Anordnen und Festlegen des Werkstücks (5) in einer im wesentlichen vertikalen Ausrichtung,
- Einführen der Trennvorrichtung (3) in das Innere des rohrförmigen Werkstücks (5) durch ein Absenken auf die gewünschte Position des durchzuführenden Schnitts und
- Bewegen der Trennvorrichtung (3) in einer im wesentlichen horizontalen Richtung zur Durchtrennung des Werkstücks (5) in einer im wesentlichen horizontalen Ebene, **dadurch gekennzeichnet, dass** das Werkstück (5) zumindest oberhalb der Position der durchzuführenden Durchtrennung mittels einer Spann- bzw. Festlegungseinrichtung (15) eingespannt bzw. ortsfest gehalten wird.

2. Verfahren nach Anspruch 1, **dadurch gekennzeichnet, dass** die Trennvorrichtung (3) und/oder das rohrförmige, zu durchtrennende Werkstück (5) entsprechend dem Innenumfang bzw. der Innenkontur des zu durchtrennenden Werkstücks (5) relativ zueinander bewegt wird bzw. werden.

3. Verfahren nach Anspruch 1 oder 2, **dadurch gekennzeichnet, dass** die Trennvorrichtung (3) in einer im wesentlichen vertikalen Richtung relativ zum Werkstück (5) bewegbar ist.

4. Verfahren nach Anspruch 1, 2 oder 3, **dadurch gekennzeichnet, dass** für das Durchtrennen des rohrförmigen Werkstücks (5) die Trennvorrichtung (3) entlang des Innenumfangs des zu durchtrennenden Werkstücks (5) bewegt wird.

5. Verfahren nach einem der Ansprüche 1 bis 4, **dadurch gekennzeichnet, dass** für ein Durchtrennen eines rohrförmigen Werkstücks (5) großer Dicke die Trennvorrichtung (3) mehrfach entlang des Innenumfangs des zu durchtrennenden Werkstücks (5) bewegt wird und zur Durchführung der Durchtrennung zunehmend und insbesondere spiralförmig in die zu durchtrennende Wandstärke des Werkstücks (5) eindringt.

6. Verfahren nach einem der Ansprüche 1 bis 5, **dadurch gekennzeichnet, dass** im Bereich der Auflage des Werkstücks (5) auf einer Halterung (14, 15, 19) beim Durchtrennen des Werkstücks (5) entstehende Späne gesammelt und/oder angefördert werden.

7. Verfahren nach einem der Ansprüche 1 bis 6, **dadurch gekennzeichnet, dass** die Trennvorrichtung (3) und das rohrförmige Werkstück (5) in einander kreuzenden bzw. schneidenden, insbesondere im wesentlichen orthogonal aufeinander stehenden Richtungen (23, 24) relativ zueinander bewegt werden.

8. Vorrichtung zum Durchtrennen eines insbesondere rohrförmigen Werkstücks (5) umfassend eine Trennvorrichtung (3), insbesondere ein rotierendes, im wesentlichen scheibenförmiges Sägeblatt, **gekennzeichnet durch** eine Halterung (14, 15, 19) zur Anordnung und Festlegung des Werkstücks (5) in einer im wesentlichen vertikalen Ausrichtung und eine Abstützeinrichtung (2, 8, 9) für die Trennvorrichtung (3) für ein Einführen der Trennvorrichtung (3) in das Innere des rohrförmigen Werkstücks (5) durch ein Absenken auf die gewünschte Position des durchzuführenden Schnitts und ein Bewegen der Trennvorrichtung (3) in einer im wesentlichen horizontalen Richtung zur Durchtrennung des Werkstücks (5) in einer im wesentlichen horizontalen Ebene, **dadurch** gekennzeichnet, dass oberhalb der Position einer Durchtrennung des Werkstücks (5) wenigstens eine das zu durchtrennende Werkstück (5) wenigstens teilweise umgebende Spann- bzw. Festlegungseinrichtung (15) vorgesehen ist.

9. Vorrichtung nach Anspruch 8, **dadurch gekennzeichnet, dass** die Abstützeinrichtung (2, 8, 9) für die Trennvorrichtung (3) in einer horizontalen Ebene insbesondere in zwei einander kreuzenden bzw. schneidenden Richtungen (12, 13) bewegbar ist.

10. Vorrichtung nach Anspruch 9, **dadurch gekennzeichnet, dass** die Abstützeinrichtung (2, 8, 9) auf einem Kreuzschlitten (11) montiert ist, welcher in einander kreuzenden Richtungen (12, 13) in an sich bekannter Weise über Kugelumlaufspindeln und Servo- bzw. Schrittmotoren verschiebbar ist.

11. Vorrichtung nach einem der Ansprüche 8, 9 oder 10, **dadurch gekennzeichnet, dass** die Abstützeinrichtung von einer im wesentlichen vertikalen Säule (9) gebildet ist, an welcher ein eine Antriebseinrichtung (6) für die Trennvorrichtung (3) sowie die Trennvorrichtung (3) tragender Arm (8) festlegbar ist.

12. Vorrichtung nach Anspruch 11, **dadurch gekennzeichnet, dass** der Arm (8) entlang der Säule (9) höhenverstellbar angeordnet ist.

13. Vorrichtung nach einem der Ansprüche 8 bis 12, **dadurch gekennzeichnet, dass** die Trennvorrichtung (3) relativ zur Abstützeinrichtung (2, 8, 9) in unterschiedlichen Höhenpositionen festlegbar ist.

14. Vorrichtung nach einem der Ansprüche 8 bis 13, **dadurch gekennzeichnet, dass** die wenigstens eine Spann- bzw. Festlegungseinrichtung (15) höhenverstellbar an einem zusätzlichen, im wesentlichen vertikalen Support (14) vorgesehen ist.

15. Vorrichtung nach einem der Ansprüche 8 bis 14, **dadurch gekennzeichnet, dass** in der Halterung bzw. Aufnahme (19) für das zu durchtrennende Werkstück (5) eine Einrichtung zum Sammeln und/oder Abfördern von beim Durchtrennen entstehenden Spänen vorgesehen ist.

16. Vorrichtung nach einem der Ansprüche 8 bis 15, **dadurch gekennzeichnet, dass** sowohl die Abstützeinrichtung (2, 8, 9) der Trennvorrichtung (3) als auch die Halterung (14, 15, 19) für das zu durchtrennende Werkstück (5) auf einer gemeinsamen Basis (1) angeordnet bzw. gelagert sind.

17. Vorrichtung nach einem der Ansprüche 8 bis 16, **dadurch gekennzeichnet, dass** die Halterung (14, 15, 19) für das rohrförmige Werkstück (5) relativ zu der Abstützeinrichtung (2, 8, 9) der Trennvorrichtung (3) bewegbar ist.

18. Vorrichtung nach einem der Ansprüche 8 bis 17, **dadurch gekennzeichnet, dass** die Halterung (14, 15, 19) zur Anordnung und Festlegung des rohrförmigen Werkstücks (5) und die Abstützeinrichtung (2, 8, 9) für die Trennvorrichtung (3) in einander kreuzenden bzw. schneidenden, insbesondere im wesentlichen orthogonal aufeinander stehenden Richtungen (23, 24) bewegbar sind

## Claims

1. Method for severing an in particular tubular workpiece (5) by means of a separating device (3), in particular a rotating, substantially disk-shaped saw blade, comprising the following steps:
- arranging and fixing the workpiece (5) in a substantially vertical orientation,
- inserting the separating device (3) into the interior of the tubular workpiece (5) by lowering it to the desired position of the cut to be performed, and
- moving the separating device (3) in a substantially horizontal direction to sever the workpiece (5) in a substantially horizontal plane, **characterised in that** the workpiece (5) is clamped or held in a positionally-fixed manner by means of a clamping or fixing device (15) at least above the position of the severing to be performed.

2. Method as claimed in claim 1, **characterised in that** the separating device (3) and/or the tubular workpiece (5) to be severed is/are moved relative to each other corresponding to the inner periphery or inner contour of the workpiece (5) to be severed.

3. Method as claimed in claim 1 or 2, **characterised in that** the separating device (3) can be moved in a substantially vertical direction relative to the workpiece (5).

4. Method as claimed in claim 1, 2 or 3, **characterised in that** for severing the tubular workpiece (5), the separating device (3) is moved along the inner periphery of the workpiece (5) to be severed.

5. Method as claimed in any one of claims 1 to 4, **characterised in that** for severing a tubular workpiece (5) having a large thickness, the separating device (3) is moved repeatedly along the inner periphery of the workpiece (5) to be severed and for performing the severing penetrates into the wall thickness, to be severed, of the workpiece (5) in an increasing and in particular helical manner.

6. Method as claimed in any one of claims 1 to 5, **characterised in that** in the region where the workpiece (5) is supported on a holder (14, 15, 19), chips generated during severing of the workpiece (5) are collected and/or removed.

7. Method as claimed in any one of claims 1 to 6, **characterised in that** the separating device (3) and the tubular workpiece (5) are moved relative to each other in mutually crossing or intersecting, in particular substantially orthogonal directions (23, 24).

8. Apparatus for severing an in particular tubular workpiece (5) comprising a separating device (3), in particular a rotating, substantially disk-shaped saw blade, **characterised by** a holder (14, 15, 19) for arranging and fixing the workpiece (5) in a substantially vertical orientation, and a support device (2, 8, 9) for the separating device (3) for inserting the separating device (3) into the interior of the tubular workpiece (5) by lowering it to the desired position of the cut to be performed and moving the separating device (3) in a substantially horizontal direction to sever the workpiece (5) in a substantially horizontal plane, **characterised in that** at least one clamping or fixing device (15) at least partly surrounding the workpiece (5) to be severed is provided above the position of the severing of the workpiece (5).

9. Apparatus as claimed in claim 8, **characterised in that** the support device (2, 8, 9) for the separating device (3) can be moved in a horizontal plane in particular in two mutually crossing or intersecting directions (12, 13).

10. Apparatus as claimed in claim 9, **characterised in that** the support device (2, 8, 9) is mounted on a compound slide rest (11) which can be slid in a manner known *per se* over recirculating ball screws and servo or step motors in mutually crossing directions (12, 13).

11. Apparatus as claimed in any one of claims 8, 9 or 10, **characterised in that** the support device is formed by a substantially vertical column (9) to which an arm (8) can be fixed, said arm bearing a drive device (6) for the separating device (3) and the separating device (3).

12. Apparatus as claimed in claim 11, **characterised in that** the arm (8) is disposed in a height-adjustable manner along the column (9).

13. Apparatus as claimed in any one of claims 8 to 12, **characterised in that** the separating device (3) can be fixed in different height positions relative to the support device (2, 8, 9).

14. Apparatus as claimed in any one of claims 8 to 13, **characterised in that** the at least one clamping or fixing device (15) is provided in a height-adjustable manner on an additional, substantially vertical support (14).

15. Apparatus as claimed in any one of claims 8 to 14, **characterised in that** provided in the holder or receptacle (19) for the workpiece (5) to be severed is a device for collecting and/or removing chips generated during severing.

16. Apparatus as claimed in any one of claims 8 to 15, **characterised in that** the support device (2, 8, 9) of the separating device (3) and the holder (14, 15, 19) for the workpiece (5) to be severed are disposed or mounted on a common base (1).

17. Apparatus as claimed in any one of claims 8 to 16, **characterised in that** the holder (14, 15, 19) for the tubular workpiece (5) can be moved relative to the support device (2, 8, 9) of the separating device (3).

18. Apparatus as claimed in any one of claims 8 to 17, **characterised in that** the holder (14, 15, 19) for arranging and fixing the tubular workpiece (5) and the support device (2, 8, 9) for the separating device (3) can be moved in mutually crossing or intersecting, in particular substantially orthogonal directions (23, 24).

## Revendications

1. Procédé pour découper une pièce (5) sensiblement tubulaire, avec un dispositif de découpe (3), en particulier une lame de scie rotative, essentiellement en forme de disque, comprenant les étapes suivantes :
- disposition et fixation de la pièce (5) dans une orientation essentiellement verticale,
- introduction du dispositif de découpe (3) à l'intérieur de la pièce tubulaire (5) par un abaissement à la position souhaitée de la coupe à effectuer, et,
- déplacement du dispositif de découpe (3) dans une direction essentiellement horizontale pour découpe de la pièce (5) dans un plan essentiellement horizontal, **caractérisé en ce que** la pièce (5) est serrée ou maintenue fixement au moins au-dessus de la position de la découpe à réaliser à l'aide d'un dispositif de fixation ou de serrage (15).

2. Procédé selon la revendication 1, **caractérisé en ce que** le dispositif de découpe (3) et/ou la pièce (5) tubulaire, à découper, est/sont déplacé(s) l'un par rapport à l'autre en fonction de la circonférence intérieure ou du contour intérieur de la pièce (5) à découper.

3. Procédé selon la revendication 1 ou 2, **caractérisé en ce que** le dispositif de découpe (3) est mobile dans une direction essentiellement verticale, par rapport à la pièce (5).

4. Procédé selon la revendication 1, 2 ou 3, **caractérisé en ce que** le dispositif de découpe (3) est déplacé le long de la circonférence intérieure de la pièce (5) à découper, pour la découpe de la pièce (5) tubulaire.

5. Procédé selon l'une des revendications 1 à 4, **caractérisé en ce que** pour une découpe d'une pièce (5) tubulaire de grosse épaisseur, le dispositif de découpe (3) est déplacé plusieurs fois le long de la circonférence intérieure de la pièce (5) à découper et pénètre, pour l'exécution de la découpe, progressivement et particulièrement en forme de spirale, dans l'épaisseur de paroi, à découper, de la pièce (5).

6. Procédé selon l'une des revendications 1 à 5, **caractérisé en ce que** dans la zone d'appui de la pièce (5) sur un support (14, 15, 19), des copeaux produits, lors de la découpe de la pièce (5), sont collectés et/ou évacués.

7. Procédé selon l'une des revendications 1 à 6, **caractérisé en ce que** le dispositif de découpe (3) et la pièce (5) tubulaire sont déplacés l'un par rapport à l'autre dans des directions (23, 24), en particulier essentiellement orthogonales entre elles, se coupant ou se croisant.

8. Dispositif pour découper une pièce (5) sensiblement tubulaire, comprenant un dispositif de découpe (3), en particulier une lame de scie rotative, essentiellement en forme de disque, caractérisé de par un support (14, 15, 19) pour disposition et fixation de la pièce (5) dans une orientation essentiellement verticale et un dispositif de soutien (2,8, 9) pour le dispositif de découpe (3) pour une introduction du dispositif de découpe (3) à l'intérieur de la pièce tubulaire (5) par un abaissement à la position souhaitée de la coupe à effectuer, et, un déplacement du dispositif de découpe (3) dans une direction essentiellement horizontale pour découpe de la pièce (5) dans un plan essentiellement horizontal, **caractérisé en ce qu'**au-dessus de la position d'une découpe de la pièce (5), il est prévu au moins un dispositif de fixation ou de serrage (15) entourant au moins partiellement la pièce (5) à découper.

9. Dispositif selon la revendication 8, **caractérisé en ce que** le dispositif de soutien (2, 8, 9) pour le dispositif de découpe (3) est mobile dans un plan horizontal, en particulier dans deux directions (12, 13), se coupant ou se croisant.

10. Dispositif selon la revendication 9, **caractérisé en ce que** le dispositif de soutien (2, 8, 9) est monté sur un chariot à mouvements croisés (11), lequel peut être déplacé de manière connue dans des directions (12, 13) se croisant, par le biais de broches à recirculation de billes et de moteurs pas à pas ou servomoteurs.

11. Dispositif selon l'une des revendications 8, 9 ou 10, **caractérisé en ce que** le dispositif de soutien est formé d'une colonne (9) essentiellement verticale, sur laquelle un bras (8) portant un dispositif d'entraînement (6) pour le dispositif de découpe (3) ainsi que le dispositif de découpe (3) peut être fixé.

12. Dispositif selon la revendication 11, **caractérisé en ce que** le bras (8) est disposé réglable en hauteur le long de la colonne (9).

13. Dispositif selon l'une des revendications 8 à 12, **caractérisé en ce que** le dispositif de découpe (3) peut être fixé à différentes positions de hauteur par rapport au dispositif de soutien (2, 8, 9).

14. Dispositif selon l'une des revendications 8 à 13, **caractérisé en ce qu'**il est prévu au moins un dispositif de fixation ou de serrage (15) réglable en hauteur au niveau d'un support (14) supplémentaire, essentiellement vertical.

15. Dispositif selon l'une des revendications 8 à 14, **caractérisé en ce qu'**il est prévu, dans le support ou le logement (19) pour la pièce (5) à découper, un dispositif pour collecter et/ou évacuer des copeaux produits lors de la découpe.

16. Dispositif selon l'une des revendications 8 à 15, **caractérisé en ce qu'**aussi bien le dispositif de soutien (2, 8, 9) du dispositif de découpe (3) que le support (14, 15, 19) pour la pièce (5) à découper sont disposés ou placés sur une base (1) commune.

17. Dispositif selon l'une des revendications 8 à 16, **caractérisé en ce que** le support (14, 15, 19) pour la pièce (5) tubulaire est mobile par rapport au dispositif de soutien (2, 8, 9) du dispositif de découpe (3).

18. Dispositif selon l'une des revendications 8 à 17, **caractérisé en ce que** le support (14, 15, 19) destiné à la disposition et à la fixation de la pièce (5) tubulaire et le dispositif de soutien (2, 8, 9) pour le dispositif de découpe (3) sont mobiles dans des directions (23, 24) en particulier essentiellement orthogonales entre elles, se coupant ou se croisant.
